# FASCICULE DE BREVET EUROPEEN

(11) **EP 3 880 314 B1**
(45) Date de publication et mention de la délivrance du brevet: **15.05.2024**
(21) Numéro de dépôt: 19801027.4
(22) Date de dépôt: 12.11.2019
(51) Int. Cl.: A62C 3/07, A62C 35/10, A62C 3/16, A62C 99/00, H01M 10/60, H01M 50/24, H01M 50/249

(54) **TUYAU EXTINCTEUR POUR UN COMPARTIMENT BATTERIE OU UN VÉHICULE À MOTEUR**
FEUERLÖSCHSCHLAUCH FÜR EIN BATTERIEFACH ODER EIN KRAFTFAHRZEUG
FIRE-EXTINGUISHING HOSE FOR A BATTERY COMPARTMENT OR A MOTOR VEHICLE

(30) Priorité: 12.11.2018 FR 1860416
(43) Date de publication de la demande: 22.09.2021
(73) Titulaire: HUTCHINSON, 75008 Paris (FR)
(72) Inventeur: ANDRE, Maxime, 45220 CHATEAU-RENARD (FR); BOSSARD, Eric, 45210 LA SELLE EN HERMOY (FR)
(74) Mandataire: Gevers & Orès
(86) Numéro de dépôt international: PCT/EP2019/081005
(87) Numéro de publication internationale: WO 2020/099392

(56) Documents cités:
- EP-A1- 0 094 192
- WO-A1-2012/140712
- WO-A1-2016/033423
- CN-A- 105 977 521
- CN-A- 106 099 008
- CN-U- 206 179 920
- US-A- 3 827 502
- US-A1- 2016 193 489
- ADEME: "Les différents gaz à effet de serres", , XP002791868, Extrait de l'Internet: URL:http://www.bilans-ges.ademe.fr/documen tation/UPLOAD_DOC_FR/index.htm?prg.htm [extrait le 2019-06-06]

## Description

### DOMAINE TECHNIQUE

La présente invention concerne un tuyau extincteur pour un compartiment batterie ou un véhicule à moteur.

### ETAT DE L'ART

L'état de l'art comprend notamment les documents US-A-3 827 502, EPA-1-0 094 192, US-A1-2016/193489 et WO-A1-2016/033423.

Il est avantageux d'équiper un véhicule automobile d'un dispositif d'extinction automatique d'un feu ou d'un départ de feu. Ce dispositif est en général autonome dans la mesure où il réagit directement à la chaleur générée par ce feu ou départ de feu.

Dans la technique actuelle, plusieurs solutions sont proposées mais ne sont pas toujours réalisables et en particulier industrialisables.

Certaines solutions consistent à utiliser un récipient de stockage de fluide extincteur, qui se présente sous la forme d'une bouteille ou bonbonne. L'inconvénient de ces solutions est lié à l'encombrement et au poids liés à l'utilisation de ce type de récipient.

D'autres solutions utilisent un simple tuyau extincteur, c'est-à-dire un tuyau qui renferment un fluide extincteur sous pression et dont les extrémités sont obturées, c'est-à-dire qu'elles ne sont pas reliées à un récipient de stockage. Autrement dit, le seul volume de fluide extincteur disponible est celui stocké dans le tuyau extincteur.
Le document WO-A1-91/08022 décrit un tuyau extincteur de ce type. Le tuyau est réalisé dans un matériau thermoplastique. En cas d'incendie, le matériau thermoplastique ramollit et la pression interne provoque la rupture du tuyau de façon à ce que le fluide extincteur s'échappe du tuyau et soit directement appliqué sur la source de l'incendie. Cependant, bien que le tuyau soit flexible et peut être agencé pour adopter n'importe quelle forme, il peut être difficile à installer en particulier lorsqu'il a une longueur importante. Il est déformable élastiquement par flexion et est susceptible de reprendre sa forme initiale lors de la pose, ce qui ne facilite pas son installation en particulier dans un véhicule à moteur.

Par ailleurs, le matériau thermoplastique utilisé est un polyamide (nylon 12) qui a une perméabilité au fluide extincteur supérieure ou égale à 1 cm³.25µm/m².atm.24h (et par exemple de l'ordre de 4.700 cm³.25µm/m².atm.24h lorsque le gaz utilisé est du CO₂), et qui est donc trop importante pour cette application, si bien que le tuyau décrit dans cette demande ne retient pas le fluide qui s'échappe à travers le matériau du tuyau. Le tuyau n'est donc fonctionnel que pendant une durée limitée, c'est-à-dire que sa durée de vie n'est pas suffisante pour l'application envisagée car le tuyau devrait être remplacé plusieurs fois au cours de la vie du véhicule.

Un autre problème est lié au fait que le fluide extincteur utilisé est en général nocif pour l'environnement car il a un PRP ou PRG (potentiel de réchauffement de la planète ou global) très important (supérieur à 5000). Pour information, le CO₂ a un PRP ou PRG de 1.

L'invention permet de remédier à au moins une partie de ces problèmes et propose notamment une solution d'extinction de feu qui soit simple à installer dans un compartiment batterie ou un véhicule à moteur.

### EXPOSE DE L'INVENTION

La présente invention propose une solution simple, efficace et économique au besoin évoqué ci-dessus. L'objet de l'invention est défini par la revendication indépendante 1.

L'invention concerne un tuyau extincteur pour un compartiment batterie ou un véhicule à moteur, ce tuyau ayant une forme allongée dont les deux extrémités longitudinales sont obturées, ce tuyau comportant une paroi tubulaire délimitant une cavité interne de stockage d'un fluide extincteur sous pression, ladite paroi comportant un matériau thermoplastique fusible sous l'effet de la chaleur générée par un feu ou un départ de feu, caractérisé en ce que le tuyau a une préforme imposée par thermoformage et comprend au moins deux tronçons rectilignes reliés par un tronçon coudé de façon à faciliter son installation dans ledit compartiment ou ledit véhicule.

La paroi a avantageusement une perméabilité audit fluide extincteur inférieure ou égale à 1 cm³.25µm/m².atm.24h. La paroi comprend ainsi un matériau à « faible perméabilité ». Un tel matériau a une perméabilité qui est au moins 10 fois, de préférence au moins 100 fois, et préférentiellement au moins 1000 fois, inférieure à un matériau actuellement utilisé dans la technique, tel qu'un polyamide. Un thermoplastique polyamide n'est donc pas un matériau à « faible perméabilité » au sens de l'invention.

L'invention utilise les propriétés thermoplastiques du tuyau pour faciliter sa mise en forme. Le tuyau est mis en forme par thermoformage, ce qui permet de lui imposer une forme correspondant à celle qu'il devrait avoir dans le véhicule. Le tuyau est préformé par thermoformage pour adopter une forme correspondant à celle dans une position souhaitée d'installation dans le véhicule.

Le fait d'avoir un tube thermoformé permet notamment de se rapprocher des zones à risques pour en assurer la protection et diminuer le temps de réponse du tuyau.

Le tuyau selon l'invention peut comprendre, outre celles de la revendication indépendante 1, une ou plusieurs des caractéristiques suivantes, prises isolément les unes des autres ou en combinaison les unes avec les autres :
▪ sa paroi comprend une première couche tubulaire dans un matériau thermoplastique fluoré ou EVOH,
▪ sa paroi comprend une seconde couche tubulaire dans un matériau thermoplastique polyamide,
▪ sa paroi comprend un polyamide, tel que du PA6 ou PA12,
▪ ledit fluide extincteur ne comprend pas de gaz HFC R236Fa,
▪ ledit fluide extincteur a un PRP ou PRG inférieur ou égal à 5000, de préférence inférieur ou égal à 500, et plus préférentiellement inférieur ou égal à 150,
▪ ledit fluide extincteur comprend au moins un gaz HFC et/ou du C₆F₁₂O, et/ou du CO₂,
▪ ledit gaz HFC est choisi parmi le R227ea et le R125,
▪ le fluide extincteur peut être liquide ou gazeux à pression atmosphérique et à température ambiante ; il est avantageusement gazeux lorsqu'il est destiné à éteindre un feu ou départ de feu ; il peut donc être liquide à pression atmosphérique et à température ambiante et devenir gazeux à une température supérieure ou égale à 50°C par exemple, comme c'est le cas du C₆F₁₂O,
▪ lesdits bouchons rapportés sont fixés par emmanchement en force ou soudage,
▪ il comprend un port d'admission et/ou d'évacuation de fluide, par exemple à une seconde de ses extrémités longitudinales,
▪ un port d'admission et/ou d'évacuation de fluide est situé à distance des extrémités longitudinales du tuyau,
▪ le ou chaque port comprend une valve à clapet, cette valve comportant un clapet qui est sollicité par un organe élastique dans une position de fermeture étanche de ladite cavité, et qui est mobile depuis cette position de fermeture jusqu'à une position d'ouverture lorsqu'un fluide alimente la cavité par le port et a une pression supérieure à celle de la pression dans la cavité,
▪ comprend au moins un capteur de pression configuré pour mesurer la pression dudit fluide dans ladite cavité,
▪ ledit au moins un capteur est relié à des moyens de communication à distance,
▪ le tuyau comprend au moins trois ou quatre tronçons rectilignes successifs reliés les uns aux autres par des tronçons coudés,
▪ les tronçons rectilignes ont une longueur cumulée qui représente au moins 80% de la longueur totale du tuyau,
▪ le ou chaque tronçon coudé est coudé à angle droit,
▪ au moins un ou au moins certains des tronçons rectiligne a/ont une longueur supérieure ou égale à 25cm, et de préférence supérieure ou égale à 50cm.

La présente invention concerne également un compartiment batterie pour un véhicule automobile, comprenant un boîtier définissant une cavité de stockage de cellules de batterie, au moins un tuyau étant logé dans cette cavité. Le tuyau s'étend de préférence sur au moins trois des côtés de ladite cavité.

La présente invention concerne également un véhicule automobile, comportant au moins un tuyau tel que décrit ci-dessus.

Avantageusement, le tuyau est installé le long d'une conduite de fluide, tel que du carburant ou un fluide de climatisation, et/ou dans un compartiment moteur (thermique ou électrique), et/ou dans un compartiment batterie, et/ou au niveau d'un équipement électrique. L'équipement électrique peut être un moteur, un câblage, etc.

Le tuyau peut s'étendre à la périphérie du moteur ou du compartiment batterie. En variante, le tuyau s'étend à l'intérieur du compartiment batterie, sur au moins trois de ses côtés.

La présente invention concerne également un procédé de fabrication d'un tuyau tel que décrit ci-dessus et d'installation de ce tuyau, dans lequel il comprend les étapes de :
a) réalisation de la paroi tubulaire,
b) mise en forme de la paroi tubulaire par thermoformage,
c) remplissage de la cavité interne de la paroi avec ledit fluide sous pression, et
d) installation du tuyau dans un compartiment batterie ou un véhicule automobile. Le tuyau peut s'étendre sur au moins trois des côtés de ladite cavité ou d'un moteur du véhicule.

Au moins une des extrémités longitudinales du tuyau peut être obturée juste avant ou juste après l'étape b) ou c).

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique d'un tuyau extincteur selon l'invention,
- la figure 2 est une vue schématique en coupe transversale du tuyau de la figure 1,
- la figure 3 est une vue schématique en coupe axiale d'un mode de réalisation d'une extrémité longitudinale d'un tuyau selon l'invention,
- la figure 4 est une vue schématique en coupe axiale d'une variante de réalisation d'une extrémité longitudinale d'un tuyau selon l'invention,
- les figures 5 à 7 sont des vues très schématiques partielles de véhicules à moteur dans lesquels sont installés des tuyaux selon l'invention,
- la figure 8 est une vue similaire à celle de la figure 1 et illustrant un tuyau dont une portion est fondue et laisse libérer du fluide extincteur sous pression,
- la figure 9 est un schéma bloc illustrant des étapes d'un mode de réalisation d'un procédé selon l'invention de fabrication d'un tuyau extincteur,
- la figure 10 est une vue schématique d'un moteur de véhicule autour duquel est installé un tuyau selon l'invention,
- les figures 11 et 12 sont des vues schématiques en perspective du tuyau de la figure 10, et
- la figure 13 est une vue schématique d'un compartiment ou pack batterie dans lequel est installé un tuyau selon l'invention.

### DESCRIPTION DETAILLEE

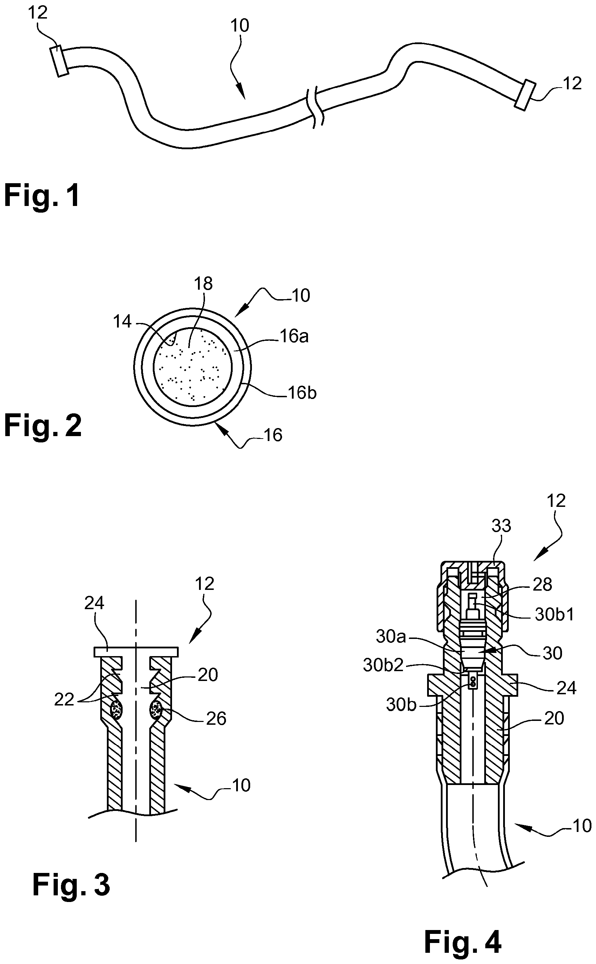

La figure 1 représente de manière schématique un tuyau extincteur 10 selon l'invention en particulier pour un véhicule à moteur. Ce tuyau 10 a une forme générale allongée et ses deux extrémités longitudinales sont obturées, par exemple par des bouchons 12.

La longueur du tuyau 10 dépend de sa localisation dans le véhicule et peut être comprise entre 50cm et 5m.

La figure 2 montre une section transversale du tuyau 10 et les figures 3 et 4 montrent des sections axiales d'exemples de réalisation des bouchons 12 aux extrémités du tuyau.

Le tuyau 10 comporte une paroi tubulaire 14 délimitant une cavité interne 14 de stockage d'un fluide extincteur 18 sous pression et liquide ou gazeux à pression atmosphérique.

La paroi 16 peut être du type monocouche ou multicouches. Dans l'exemple représenté à la figure 2, la paroi 16 comprend deux couches, respectivement interne 16a et externe 16b.

La couche interne 16a est réalisée dans un matériau à faible perméabilité par rapport au fluide 18, c'est-à-dire à une perméabilité inférieure ou égale à 1 cm³.25µm/m².atm.24h. La couche 16a est par exemple réalisée en matériau thermoplastique fluoré ou EVOH.

La couche externe 16b est réalisée dans un matériau thermoplastique polyamide, qui a elle en général une perméabilité supérieure à celle de la couche interne 16a, et par exemple supérieure ou égale à 1 cm³.25µm/m².atm.24h.

Comme dans l'exemple représenté, il est préférable que la couche à faible perméabilité soit située à l'intérieur de la couche à plus forte perméabilité. En effet, dans le cas contraire, il y aurait un risque de migration du gaz à travers la couche interne à plus forte perméabilité et de stagnation de ce gaz à l'interface entre les deux couches, susceptible d'entraîner un délaminage des couches.

Il est par ailleurs avantageux de réaliser le tuyau 10 en deux couches plutôt qu'en une seule couche en matériau à faible perméabilité car ce matériau est relativement coûteux. Pour avoir une tenue suffisante, notamment à la pression, un tuyau monocouche devrait avoir une épaisseur importante de couche à faible perméabilité. Dans le cadre d'un tuyau bicouche ou multicouche, cette tenue est assurée par la ou les couches à plus forte perméabilité, et la couche à faible perméabilité peut avoir une épaisseur relativement faible suffisante pour assurer la fonction d'imperméabilité recherchée.

Dans une autre variante non représentée, la couche 16a pourrait être disposée entre deux couches 16b. Cette configuration permettrait d'améliorer la tenue mécanique de la couche 16a lors de l'étape de mise en forme du tuyau (et ainsi éviter tout risque de déchirure de cette couche), tout en garantissant une étanchéité optimale du tuyau.

Le tableau ci-dessous comporte des exemples de valeurs de perméabilité pour différents matériaux thermoplastiques. Les tests de perméabilité ont été réalisés à température ambiante, avec un gaz du type HFC à une pression de 10 bars, et pour une épaisseur de paroi de 2mm environ. Les mêmes tests ont été réalisés dans les mêmes conditions et avec du CO₂ et ont permis de confirmer les différences de perméabilité.

| Fournisseur | Marque | Grade | Type | Perméabilité (cm³.25µm/m².atm.24h) |
|---|---|---|---|---|
| Degussa | Vestamid | L2141SW | PA12 | ≥ 1 |
| Dyneon | - | 6510N | PFA | ≤ 1 |
| Dyneon | - | 6235 | ETFE | ≤ 1 |
| Dyneon | - | X6307 | FEP | ≤ 1 |
| GoodFellow | - | - | PVDF | ≤ 1 |
| - | - | - | EVOH | ≤ 1 |

Parmi les matériaux de la paroi 16, au moins un a une propriété fusible sous l'effet de la chaleur générée par un feu ou un départ de feu, et en particulier sous l'effet d'une température supérieure ou égale à 70°C, voire 120°C.

Dans l'exemple décrit plus haut, les deux couches 16a, 16b ont une telle propriété fusible.

Dans un exemple particulier de réalisation de l'invention, le tuyau a un diamètre externe compris entre 10 et 30mm, et de préférence entre 10 et 20mm. La paroi a une épaisseur comprise entre 1 et 3mm, et de préférence entre 1 et 2mm.

Le fluide extincteur peut être stocké dans la cavité 14 du tuyau à une pression supérieure ou égale à 10 bars, de préférence supérieure ou égale à 20 bars, et plus préférentiellement supérieure ou égale à 30 bars.

Le fluide extincteur ne comprend de préférence pas de gaz HFC du type R236Fa car ce gaz a un PRP ou PRG très important de l'ordre de 9400.

Le fluide extincteur a de préférence un PRP ou PRG inférieur ou égal à 5000. Le fluide peut comprendre au moins un gaz HFC et/ou du C₆F₁₂O, et/ou du CO₂. Parmi les gaz HFC utilisables, les gaz R227ea et R125 sont préférés car ils ont un PRP ou PRG de l'ordre de 3400-3500. La société DuPont commercialise par exemple des gaz de ce type sous les dénominations FE-25 et FM-200.

Le CO₂ est avantageux car il a un PRP ou PRG de 1.

Enfin, le C₆F₁₂O est également avantageux car il a un PRP ou PRG de 1. La société 3M notamment commercialise ce type de gaz sous la dénomination Novec 1230 (FK-5-1-12).

Les figures 3 et 4 montrent des exemples de réalisation des bouchons 12 d'extrémité du tuyau 10.

Le bouchon 12 visible à la figure 3 est emmanché en force dans une des extrémités longitudinales du tuyau 10. Il est de préférence réalisé dans un matériau plastique rigide et comprend un corps 20 comportant des nervures annulaires externes 22 d'ancrage dans la paroi 14 du tuyau. Le corps peut ainsi être du type à dents de sapin. Il peut comprendre une tête transversale 24 en appui sur le bord libre de l'extrémité du tube. Un joint torique 26 d'étanchéité peut en outre être monté entre le corps 20 et la paroi 14 du tuyau, pour garantir l'étanchéité de l'emmanchement.

Le bouchon 12 visible à la figure 4 est engagé dans une des extrémités longitudinales du tuyau 10 et y est soudé par exemple par ultrason. Le bouchon 12 est de préférence réalisé dans un matériau plastique rigide et comprend un corps 20 et une tête transversale 24 en appui sur le bord libre de l'extrémité du tube.

Un tel bouchon 12 peut être équipé d'un port 28 d'admission et/ou d'évacuation de fluide. Ce port 28 comprend de préférence une valve à clapet 30. La valve 30 comporte un corps cylindrique 30a traversé axialement par un clapet 30b. Ce clapet 30b comporte une tige cylindrique 30b1 traversant un alésage du corps 30a et portant un disque 30b2 configuré pour prendre appui sur un siège du corps 30a. Le clapet 30b est sollicité par un organe élastique (non visible) dans une position de fermeture étanche de la cavité 16 dans laquelle le disque 30b2 est en appui sur le siège et obture hermétiquement l'alésage du corps. Le clapet 30b est mobile depuis cette position de fermeture jusqu'à une position d'ouverture dans laquelle le disque 30b2 est éloigné du siège et un fluide peut passer à travers l'alésage du corps 30a. Le déplacement du clapet 30b vers sa position d'ouverture intervient lorsqu'un fluide alimente la cavité par le port et a une pression supérieure à celle de la pression dans la cavité. Dans le cas représenté, l'extrémité libre du bouchon 12 reçoit un capot 33 de fermeture du port 28 et de protection de la valve 30.

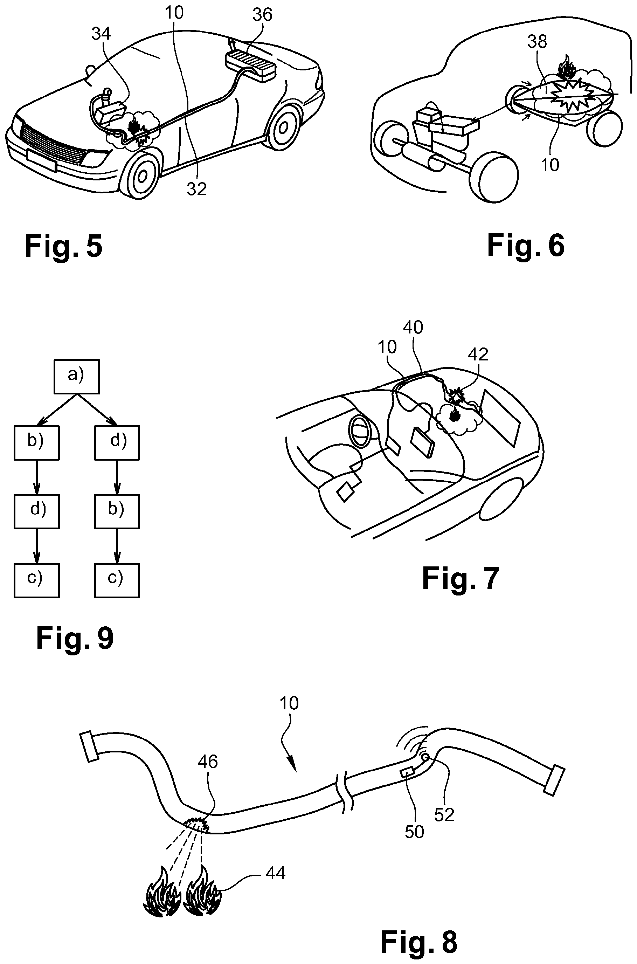

Les figures 5 à 7 montrent des exemples d'utilisation et d'installation d'un tuyau extincteur 10 selon l'invention. Dans le cas de la figure 5, un tuyau 10 de longueur supérieure à 2m est installé le long et à proximité d'une conduite 32 de carburant s'étendant entre le moteur thermique 34 et le réservoir de carburant 36 d'un véhicule. Ce tuyau pourrait être remplacé par une série de plusieurs tuyaux disposés les uns derrière les autres.

Dans la figure 6, un tuyau 10 est installé dans un compartiment de stockage de batteries électriques 38.

Dans la figure 7, un tuyau 10 est installé le long et à proximité d'une conduite 40 de circulation d'un circuit 42 de climatisation.

La figure 8 est similaire à la figure 1 et illustre le principe de fonctionnement d'un tuyau 10 selon l'invention. Lorsqu'un feu 44 ou départ de feu apparaît dans un véhicule, de la chaleur est générée. A partir d'une certaine température, par exemple supérieure à 70 voire 120°C, la zone 46 de la paroi 14 du tuyau 10 exposée à cette température se ramollit et se rompt du fait de la pression à l'intérieur du tuyau. Le fluide extincteur 18 est alors libéré et est vaporisé directement sur le feu pour entraîner son extinction immédiate et éviter donc sa propagation.

Dans un cas particulier de réalisation de l'invention, le tuyau 10 a une longueur de 2m et sa cavité 14 a un volume de 0,5L. La cavité du tuyau est remplie avec un fluide extincteur à une pression telle qu'elle contient un volume de gaz de 0,56m³ à 20°C, de 0,69m³ à 80°C et de 0,43m³ à -40°C. Le volume libre sous le capot moteur d'un véhicule est en général de l'ordre de 0,1m3. Quelle que soit la température extérieure, le volume de gaz libéré par le tuyau en cas de feu ou départ de feu est largement suffisant pour occuper tout le volume libre sous le capot moteur et ainsi assurer une extinction immédiate du feu ou départ de feu.

Comme cela est visible aux figures 1 et 8, le tuyau 10 a une forme particulière propre à la forme qu'il doit avoir dans le véhicule. Cette préforme ou mise en forme est réalisée par thermoformage, pendant la fabrication du tuyau.

La figure 8 illustre en outre une variante de réalisation de l'invention dans laquelle le tuyau 10 est équipé d'un capteur 50 de la pression à l'intérieur de la cavité 14. Ce capteur de pression 50 est avantageusement relié à des moyens 52 de communication à distance du type par exemple RFID ou radio. Lors d'une opération de maintenance du véhicule par exemple, un opérateur peut lire au moyen d'un équipement approprié la pression dans la cavité du tuyau en passant simplement cet équipement à proximité d'une étiquette RFID ou d'un émetteur radio disposé sur le tuyau.

Dans une variante préférée, les moyens 52 de communication à distance coopèrent avec des éléments du véhicule pour alerter le conducteur du véhicule en cas d'anomalie. C'est par exemple le cas lorsque la pression dans la cavité est trop faible pour que le tuyau soit opérationnel et puisse éteindre un feu ou départ de feu. Dans ce cas, le conducteur du véhicule pourrait être alerté par un voyant de son tableau de bord signifiant que le tuyau présente une anomalie et doit subir une opération de maintenance, qui consisterait à le remplacer ou à le remplir de fluide à une pression adéquate. Dans un tel cas, l'électronique du véhicule pourrait être configurée pour mettre le véhicule en arrêt ou en mode dégradé décourageant le conducteur d'utiliser son véhicule, jusqu'à ce que le tuyau subisse cette opération de maintenance.

En variante, les éléments précités du véhicule pourraient être reliés au capteur de pression du tuyau par une liaison filaire.

Le procédé de fabrication du tuyau 10 comprend les étapes, illustrées à la figure 9, de a) réalisation de la paroi 16, b) mise en forme de la paroi 16 par thermoformage, et remplissage de la cavité 14 de la paroi avec le fluide extincteur sous pression. Les extrémités longitudinales peuvent être obturées par les bouchons 12 juste avant ou juste après la mise en forme de la paroi (étape d)). Le procédé comprend en outre l'installation du tuyau 10 dans le véhicule, par exemple autour d'un moteur, ou dans un compartiment batterie.

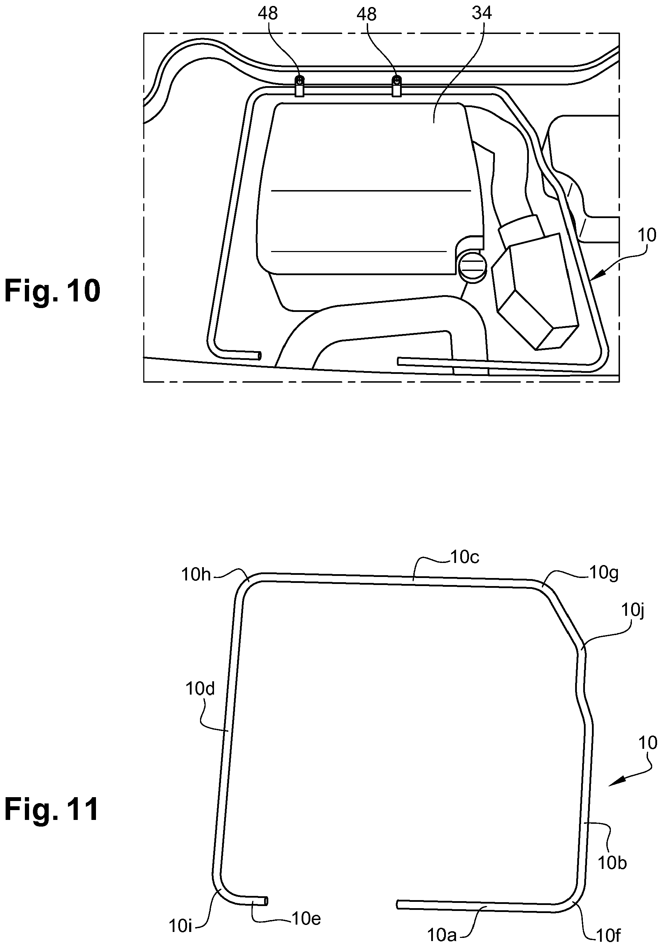

La figure 10 représente plus en détail l'installation d'un tuyau 10 dans un véhicule à moteur, et plus exactement autour du moteur thermique 34 de ce véhicule.

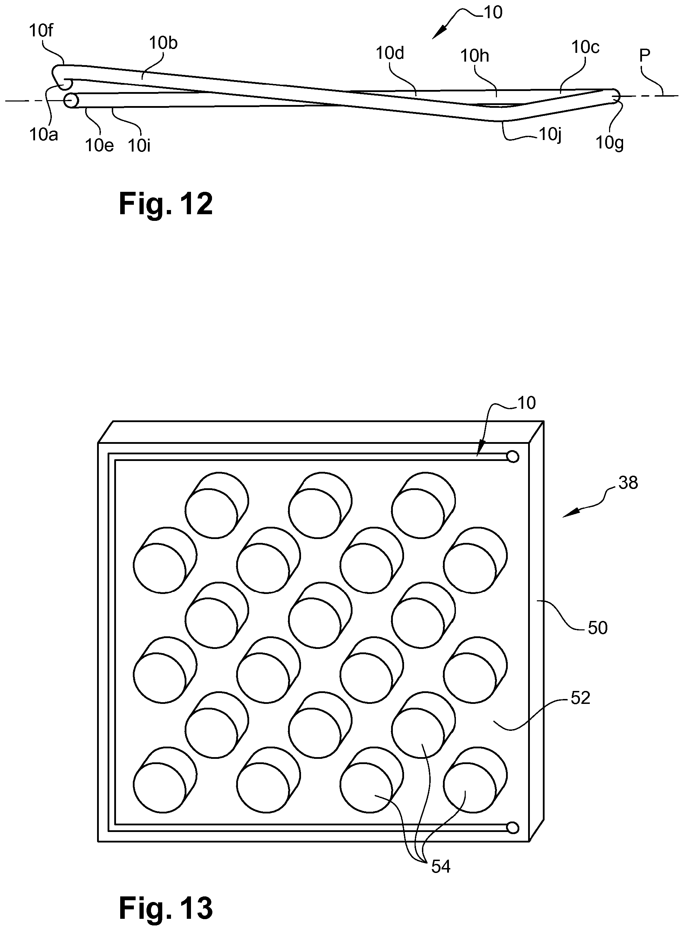

Le tuyau 10 est mieux visible aux figures 11 et 12. Il a une préforme imposée par thermoformage et comprend des tronçons rectilignes 10a-10e reliés par des tronçons coudés 10f-10i de façon à faciliter son installation autour du moteur 34.

Les tronçons 10a-10e ont des longueurs prédéterminées qui peuvent être supérieures ou égales à 25cm, voire 50 cm. La plupart des tronçons 10f-10i sont coudés à angle droit.

La figure 12 permet de constater que le tuyau 10 ne s'étend pas forcément sur un seul et même plan, le tuyau pouvant comprendre un tronçon 10j (entre 10b et 10g) décalé vers le bas et/ou vers le haut par rapport à un plan P contenant les tronçons rectilignes 10c, 10d et 10e.

La figure 10 permet également de voire des systèmes 48 de fixation du tuyau 10 au véhicule. Ces systèmes sont ici au nombre de deux et comprennent des colliers de serrage montés autour du tuyau 10 et fixés au châssis du véhicule par des vis par exemple. Ces systèmes sont avantageusement situés sur au moins certains des tronçons rectilignes 10a-10e.

La figure 13 représente plus en détail l'installation d'un tuyau 10 dans un compartiment ou pack batterie 38. Le compartiment batterie 38 comprend un boîtier 50 définissant une cavité 52 dans laquelle sont logées des cellules de batterie 54. Comme schématiquement représenté à la figure 6, le tuyau 10 s'étend dans la cavité 52 du compartiment 38, autour des cellules de batterie 54, sur au moins trois des côtés du compartiment. En variante, il pourrait s'étendre dans la cavité 52 mais au-dessus et/ou au-dessous des cellules de batterie 54.

## Revendications

1. Dispositif d'extinction automatique d'un feu ou d'un départ de feu pour un compartiment batterie ou un véhicule à moteur, ce dispositif étant constitué d'un tuyau (10) qui a une forme allongée, le tuyau comportant une paroi tubulaire (16) délimitant une cavité interne (14), le tuyau comportant un fluide extincteur (18) sous pression stocké dans ladite cavité, ladite paroi comportant un matériau thermoplastique fusible à une température correspondant à la chaleur générée par un feu (44) ou un départ de feu, le tuyau ayant une préforme et comprenant au moins deux tronçons rectilignes reliés par un tronçon coudé de façon à faciliter son installation dans ledit compartiment batterie véhicule ou ledit véhicule, **caractérisé en ce que** le tuyau a deux extrémités longitudinales qui sont obturées par des bouchons (12) rapportés et fixés à ces extrémités de façon à ce que le fluide extincteur sous pression soit complètement stocké dans ladite cavité, l'un de ces bouchons (12) comprenant au moins un port (28) d'admission et/ou d'évacuation de fluide, et **en ce que** le tuyau est thermoformable et sa préforme est imposée par thermoformage, ladite température de fusion étant supérieure ou égale à 70°C.

2. Dispositif selon la revendication 1, dans lequel sa paroi (16) comprend une première couche tubulaire (16a) dans un matériau thermoplastique fluoré ou EVOH, voire également au moins une seconde couche tubulaire (16b) dans un matériau thermoplastique polyamide.

3. Dispositif selon la revendication 2, dans lequel ladite première couche (16a) est disposée à l'intérieur de ladite seconde couche (16b) ou entre deux secondes couches.

4. Dispositif selon l'une des revendications précédentes, dans lequel ledit fluide extincteur (18) comprend au moins un gaz HFC et/ou du C₆F₁₂O, et/ou du CO₂.

5. Dispositif selon l'une des revendications précédentes, dans lequel les bouchons (12) sont fixés par emmanchement en force ou soudage.

6. Dispositif selon l'une des revendications précédentes, dans lequel le ou chaque port comprend une valve à clapet, cette valve comportant un clapet (30) qui est sollicité par un organe élastique (32) dans une position de fermeture étanche de ladite cavité, et qui est mobile depuis cette position de fermeture jusqu'à une position d'ouverture lorsqu'un fluide alimente la cavité par le port et a une pression supérieure à celle de la pression dans la cavité.

7. Dispositif selon l'une des revendications précédentes, dans lequel il comprend au moins un capteur de pression (50) configuré pour mesurer la pression dudit fluide (18) dans ladite cavité (14).

8. Dispositif selon l'une des revendications précédentes, dans lequel il comprend au moins trois ou quatre tronçons rectilignes successifs reliés les uns aux autres par des tronçons coudés.

9. Dispositif selon l'une des revendications précédentes, dans lequel les tronçons rectilignes ont une longueur cumulée qui représente au moins 80% de la longueur totale du tuyau.

10. Dispositif selon l'une des revendications précédentes, dans lequel le ou chaque tronçon coudé est coudé à angle droit.

11. Dispositif selon l'une des revendications précédentes, dans lequel au moins un ou au moins certains des tronçons rectiligne a/ont une longueur supérieure ou égale à 25cm, et de préférence supérieure ou égale à 50cm.

12. Compartiment batterie pour un véhicule automobile, comprenant un boîtier définissant une cavité de stockage de cellules de batterie, au moins un dispositif selon l'une des revendications précédentes étant logé dans cette cavité.

13. Véhicule automobile, comportant au moins un dispositif selon l'une des revendications 1 à 11.

## Patentansprüche

1. Vorrichtung zur automatischen Löschung eines Feuers oder eines ausbrechenden Feuers für ein Batteriefach oder ein Motorfahrzeug, wobei diese Vorrichtung aus einem Schlauch (10) besteht, der eine längliche Form aufweist, wobei der Schlauch eine rohrförmige Wand (16) umfasst, die einen inneren Hohlraum (14) begrenzt, wobei der Schlauch eine druckbeaufschlagte Löschflüssigkeit (18) umfasst, die im Hohlraum gelagert ist, wobei die Wand ein thermoplastisches Material umfasst, das bei einer Temperatur schmelzbar ist, die der von einem Feuer (44) oder einem ausbrechenden Feuer erzeugten Hitze entspricht, wobei der Schlauch eine Vorform aufweist und mindestens zwei gerade Abschnitte umfasst, die derart durch einen gewinkelten Abschnitt verbunden sind, dass dessen Einbau in das Fahrzeugbatteriefach oder das Fahrzeug erleichtert wird, **dadurch gekennzeichnet, dass** der Schlauch zwei Längsenden aufweist, die durch Stopfen (12) verschlossen sind, die derart an diesen Enden angebracht und befestigt sind, dass die druckbeaufschlagte Löschflüssigkeit vollständig im Hohlraum gelagert wird, wobei einer dieser Stopfen (12) mindestens einen Anschluss (28) zur Einleitung und/oder Abführung von Flüssigkeit umfasst, und dadurch, dass der Schlauch thermisch formbar ist und seine Vorform durch Thermoformierung festgelegt wird, wobei die Schmelztemperatur größer oder gleich 70 °C ist.

2. Vorrichtung nach Anspruch 1, wobei ihre Wand (16) eine erste rohrförmige Schicht (16a) aus einem fluorierten thermoplastischen Material oder EVOH, sogar ebenfalls mindestens eine zweite rohrförmige Schicht (16b) aus einem thermoplastischen Polyamid umfasst.

3. Vorrichtung nach Anspruch 2, wobei die erste Schicht (16a) im inneren der zweiten Schicht (16b) oder zwischen zwei zweiten Schichten angeordnet ist.

4. Vorrichtung nach einem der vorstehenden Ansprüche, wobei die Löschflüssigkeit (18) mindestens ein HFC-Gas und/oder C₆F₁₂O, und/oder CO₂ umfasst.

5. Vorrichtung nach einem der vorstehenden Ansprüche, wobei die Stopfen (12) durch Einpresskraft oder Schweißen befestigt sind.

6. Vorrichtung nach einem der vorstehenden Ansprüche, wobei der oder jeder Anschluss ein Rückschlagventil umfasst, wobei dieses Ventil eine Klappe (30) umfasst, die von einem elastischen Bauteil (32) in eine dichte Verschlussposition des Hohlraums vorgespannt ist und die ausgehend von dieser Verschlussposition bis zu einer Öffnungsposition bewegbar ist, wenn eine Flüssigkeit über den Anschluss dem Hohlraum zugeführt wird und einen Druck aufweist, der größer ist als der des Drucks des Hohlraums.

7. Vorrichtung nach einem der vorstehenden Ansprüche, wobei sie mindestens einen Drucksensor (50) umfasst, der konfiguriert ist, um den Druck der Flüssigkeit (18) im Hohlraum (14) zu messen.

8. Vorrichtung nach einem der vorstehenden Ansprüche, wobei sie mindestens drei oder vier aufeinanderfolgende gerade Abschnitte umfasst, die durch gewinkelte Abschnitte miteinander verbunden sind.

9. Vorrichtung nach einem der vorstehenden Ansprüche, wobei die geraden Abschnitte eine kumulierte Länge aufweisen, die mindestens 80% der Gesamtlänge des Schlauchs darstellt.

10. Vorrichtung nach einem der vorstehenden Ansprüche, wobei der oder jeder gewinkelte Abschnitt im rechten Winkel gewinkelt ist.

11. Vorrichtung nach einem der vorstehenden Ansprüche, wobei mindestens ein oder mindestens gewisse der geraden Abschnitte eine Länge aufweist/aufweisen, die größer oder gleich 25 cm, und vorzugsweise größer oder gleich 50 cm ist.

12. Batteriefach für ein Kraftfahrzeug, umfassend ein Gehäuse, das einen Hohlraum zum Lagern von Batteriezellen definiert, wobei mindestens eine Vorrichtung nach einem der vorstehenden Ansprüche in diesem Hohlraum aufgenommen ist.

13. Kraftfahrzeug, umfassend mindestens eine Vorrichtung nach einem der Ansprüche 1 bis 11.

## Claims

1. A device for automatically extinguishing a fire or a fire outbreak for a battery compartment or a motor vehicle, this device consisting of a pipe (10) which has an elongate shape, the pipe comprising a tubular wall (16) delimiting an internal cavity (14), the pipe comprising an extinguishing fluid (18) under pressure stored in said cavity, said wall comprising a thermoplastic material fusible at a temperature corresponding to the heat generated by a fire (44) or a fire outbreak, the pipe having a preform and comprising at least two straight sections connected by an angled section so as to facilitate its installation in said vehicle battery compartment or said vehicle, **characterised in that** the pipe has two longitudinal ends which are closed by plugs (12) attached and fixed at these ends so that the extinguishing fluid under pressure is completely stored in said cavity, one of these plugs (12) comprising at least one fluid inlet and/or outlet port (28), and **in that** the pipe is thermoformable and its preform is imposed by thermoforming, said melting temperature being greater than or equal to 70°C.

2. The device according to claim 1, wherein its wall (16) comprises a first tubular layer (16a) made of a fluorinated thermoplastic material or EVOH, or also at least a second tubular layer (16b) made of a polyamide thermoplastic material.

3. The device according to claim 2, wherein said first layer (16a) is disposed within said second layer (16b) or between two second layers.

4. The device according to one of the preceding claims, wherein said extinguishing fluid (18) comprises at least one HFC gas and/or C₆F₁₂O, and/or CO₂.

5. The device according to one of the preceding claims, wherein the plugs (12) are fixed by press-fitting or welding.

6. The device according to one of the preceding claims, wherein said or each port comprises a flap valve, this valve comprising a flap (30) which is urged by a resilient member (32) into a position of sealed closure of said cavity, and which is movable from this closure position to an open position when a fluid feeds the cavity via the port and has a pressure greater than that of the pressure in the cavity.

7. The device according to one of the preceding claims, wherein it comprises at least one pressure sensor (50) configured to measure the pressure of said fluid (18) in said cavity (14).

8. The device according to one of the preceding claims, wherein it comprises at least three or four successive straight sections connected to one another by bent sections.

9. The device according to one of the preceding claims, wherein the straight sections have a cumulative length which represents at least 80% of the total length of the pipe.

10. The device according to one of the preceding claims, wherein said or each bent section is bent at right angles.

11. The device according to one of the preceding claims, wherein at least one or at least some of the straight sections has/have a length greater than or equal to 25cm, and preferably greater than or equal to 50cm.

12. A battery compartment for a motor vehicle, comprising a case defining a battery cell storage cavity, at least one device according to one of the preceding claims being housed in this cavity.

13. A motor vehicle, comprising at least one device according to one of claims 1 to 11.
